# EUROPÄISCHE PATENTANMELDUNG

(11) **EP 1 191 245 A2**
(43) Veröffentlichungstag der Anmeldung: **27.03.2002**
(21) Anmeldenummer: 01122493.8
(22) Anmeldetag: 20.09.2001
(51) Int. Cl.: F16D 55/00

(54) **Abdeckblech für Scheibenbremsen**

(30) Priorität: 21.09.2000 DE 10047468
(71) Anmelder: BPW Bergische Achsen Kommanditgesellschaft, 51674 Wiehl (DE)
(72) Erfinder: Ebert, Jörg, Dr.Ing., 50858 Köln (DE); Borlinghaus, Thomas, Dipl.-Ing., 51647 Gummersbach (DE)
(74) Vertreter: Stenger, Watzke & Ring Patentanwälte

(57) **Zusammenfassung**

Die Erfindung betrifft ein Abdeckblech (8) zum seitlichen Abdecken des nicht durch einen Bremssattel und/oder Bremssattelträger abgedeckten Bereichs einer Scheibenbremse, wobei das Abdeckblech einen Innenrand (17) aufweist, der an den Bremssattel und/oder den Bremssattelträger angepaßt ist, und einen Außenrand (18), der im wesentlichen teilkreisförmig verläuft. Um ein derartiges Abdeckblech dahingehend zu verbessern, daß es auch im Zusammenhang mit ausgedehnten Bremssätteln und/oder Bremssattelträgern verwendet werden kann und dabei auftretenden Schwingungsbelastungen Stand hält, wird für das oben genannte Abdeckblech eine im Bereich des Außenrandes (18) des Abdeckblechs angeformte, sich in Umfangsrichtung erstreckende Stufe (9), an der das Abdeckblech (8) über eine axiale Distanz aus einer ersten Abdeckebene (14) in eine zweite, im Montagezustand näher zu der Bremsscheibe hin gelegene Ebene (15) übergeht, vorgeschlagen, wobei sich das Blech in der zweiten Ebene (15) so weit radial nach außen erstreckt, daß es in montiertem Zustand außerhalb des Radius der Bremsscheibe endet. Weiterhin wird mit der Erfindung eine verbesserte Scheibenbremse angegeben, welche das erfindungsgemäße Abdeckblech (8) verwendet.

## Beschreibung

Die Erfindung betrifft ein Abdeckblech zum seitlichen Abdecken des nicht durch einen Bremssattel und/oder Bremssattelträger abgedeckten Bereichs einer Scheibenbremse, insbesondere von Nutzfahrzeugen, wobei das Abdeckblech einen Innenrand aufweist, der an den Bremssattel und/oder den Bremssattelträger angepaßt ist, und einen Außenrand, der im wesentlichen teilkreisförmig verläuft. Weiterhin betrifft die Erfindung eine Scheibenbremse.

Zum Abbremsen von bewegten Fahrzeugen werden im Stand der Technik einzelne auf einer Achse gelagerte oder in Einzelradaufhängungen angeordnete Räder mit Bremsen ausgerüstet, welche von dem Führer des Fahrzeuges betätigt werden können. Die Betätigung erfolgt dabei üblicherweise durch Druck, beispielsweise durch Hydraulik- oder Pneumatikdruck. Hierbei werden zwei grundsätzlich verschiedene Typen von Bremsen unterschieden, nämlich die Trommelbremse, bei der stationäre Bremsbacken von Innen gegen die Wandung einer mit dem Rad rotierenden Trommel zum Verzögern des Rades gepreßt werden, sowie Scheibenbremse, bei der eine mit dem Rad rotierende Bremsscheibe (Rotor) zum Verzögern des Rades zwischen beidseitig der Scheibe an einem Bremssattel (Stator) angeordneten Bremsbacken verklemmt und somit durch Reibung verzögert wird. Scheibenbremsen lassen dabei eine deutlich bessere Bremswirkung erkennen als Trommelbremsen und werden aus diesem Grunde bevorzugt eingesetzt, um hohe Verzögerungskräfte zu erzeugen.

Um eine optimale Bremswirkung bei einer Scheibenbremse zu erzeugen, muß der Bremssattel, welcher die beidseits der Bremsscheibe angreifenden Bremsbeläge trägt, die Bremsbeläge auf beiden Seiten der Bremsscheibe mit gleichmäßigem Druck auf die Bremsscheibe führen, um einen einseitigen Verschleiß der Bremsbeläge und damit ein Nachlassen der Bremswirkung zu verhindern. Ein erhöhter Verschleiß der Bremsbeläge stellt sich dabei dann ein, wenn Sandpartikel in das Bremssystem eindringen. Dies ist insbesondere dann der Fall, wenn sich das Fahrzeug auf nicht befestigten Straßen, beispielsweise Sandwegen, oder bei Nutzfahrzeugen in abseits von Straßen gelegenen Einsatzgebieten, beispielsweise Kiesgruben, Baustellen oder landwirtschaftlichen Flächen, bewegt.

Dabei ist die Scheibenbremse auf der dem Rad zugewandten Seite durch die Felge des Rades, das Rad selbst sowie durch einen eventuellen zusätzlichen Flansch zum Anbringen der Felge vergleichsweise gut abgedeckt, jedoch liegt sie auf der der Achse zugewandten Seite offen und ist anfällig für den Eintrag von Staub bzw. sandhaltigen Verschmutzungen. Dies führt dazu, daß Bremsscheibe bzw. Bremsbeläge auf dieser Seite einer stärkeren, ungleichmäßigen Abnutzung unterliegen als auf der dem Rad zugewandten Seite. Diese Problematik wird bei Nutzfahrzeugen mit nah beieinander angeordneten Mehrfachachsen noch einmal verstärkt, da dort von den Reifen einer Achse aufgenommener Schmutz in Richtung der benachbarten Achse und damit auch in Richtung der offenen Seite der Scheibenbremse geschleudert wird.

Um einem Verschleiß durch derartige Verschmutzungen vorzubeugen, werden üblicherweise Abdeckungen vorgesehen, die die Scheibenbremse auf der dem Rad abgewandten Seite überdecken. Derartige Abdeckungen sind beispielsweise aus den US-Patenten 4,155,601 sowie 4,317,508 bekannt. Bei den hier gezeigten Abdeckungen handelt es sich um Abdeckungen für Scheibenbremsen im PKW-Bereich, in dem die Verwendung vergleichsweise kleiner Bremssättel üblich ist. Aus diesem Grunde können die Abdeckungen in ihrem teilkreisförmigen Bereich nahezu einen Dreiviertelkreis umschließen, was zu einer vergleichsweise hohen Stabilität des Abdeckbleches führt. Darüber hinaus stellen die bei PKW-Bremsen auftretenden vergleichsweise niedrigen Temperaturen nur geringe Anforderungen an die Ausbildung der Abdeckbleche.

Im Bereich von Nutzfahrzeugen jedoch, die verglichen mit PKW das Fünfzehn- bis Zwanzigfache an zulässigem Gesamtgewicht aufweisen, ist zum Erreichen einer angemessenen Bremswirkung einerseits ein deutlich größerer Bremssattel und damit ein deutlich größerer Bremssattelträger erforderlich, und es entstehen beim Bremsvorgang deutlich höhere Temperaturen. Dies stellt an ein Abdeckblech zum Verhindern des Eindringens von Schmutz in dem Bereich der Scheibenbremse andere spezifische Anforderungen. So kann das Abdeckblech nicht wie bei den bekannten PKW-Anwendungen topfförmig einen Teilkreis von ca. einem Dreiviertelkreis, also 270°, umschließen, sondern ist auf deutlich kleinere Bruchteile eines Kreisumfanges beschränkt. Hierdurch verbunden mit der Größe des Bremssattels ergibt sich eine sichelartige Form des Abdeckbleches, welche hinsichtlich ihrer mechanischen Belastbarkeit einem linearen Element ähnelt. Darüber hinaus sind die Bereiche der Räder und der damit verbundenen Bremsen bei Nutzfahrzeugen aufgrund der Tatsache, daß sich letzere oftmals auch abseits von befestigten Straßen bewege, starken Belastungen ausgesetzt. So kommt es in diesem Bereich häufig zu Stößen, die in dem Abdeckblech Torsions- und Biegeschwingungen auslösen, welche schließlich zu Brüchen derartiger Bleche führen können. Werden solche Brüche nicht bemerkt, so kann Schmutz dennoch in die Scheibenbremse eindringen mit den oben geschilderten negativen Folgen bezüglich des Verschleißes. Darüber hinaus ist ein Auswechseln der gebrochenen Abdeckungen erforderlich.

Ausgehend von diesem Stand der Technik liegt der Erfindung die **Aufgabe** zugrunde, ein Abdeckblech der eingangs genannten Art dahingehend weiterzubilden, daß es auch für Scheibenbremsen mit ausgedehntem Bremssattel und/oder Bremssattelträger einsetzbar ist und dabei gegenüber auftretenden Schwingungsbelastungen unempfindlich ist.

Zur **Lösung** dieser Aufgabe wird für ein Abdeckblech der eingangs genannten Art vorgeschlagen, eine im Bereich des Außenrandes des Abdeckblechs angeformte, in Umfangsrichtung verlaufende Stufe, an der das Abdeckblech über eine axiale Distanz aus einer ersten Abdeckebene in eine zweite, im Montagezustand näher zu der Bremsscheibe hin gelegene Ebene übergeht, wobei sich das Abdeckblech in der zweiten Ebene so weit radial nach außen erstreckt, daß es im montierten Zustand außerhalb des Radius der Bremsscheibe endet.

Die erfindungsgemäße Stufe führt dabei zu einer Versteifung gegenüber Biegelasten ebenso wie gegenüber Torsionslasten, so daß das Abdeckblech insgesamt weniger anfällig für Schwingungsbelastungen ist und insbesondere den bei Nutzfahrzeugen auftretenden starken Belastungen Stand halten kann. Die Stufe kann sich dabei im Bereich des Außenrandes kontinuierlich in Umfangsrichtung erstrecken, sie kann aber auch eine oder mehrere Unterbrechungen in Umfangsrichtung aufweisen. Zusätzlich zu einer Versteifung führt die Stufe dazu, daß der axiale Abstand zwischen dem Abdeckblech in der ersten Abdeckebene und der dem Abdeckblech zugewandten Bremsfläche der Bremsscheibe vergrößert ist, was hinsichtlich der beim Bremsen erzeugten Reibungswärme einen Vorteil bietet. Diese Wärme wird in einem vergleichsweise großen Volumen verteilt und über Luftzirkulation abgeführt. Das Abdeckblech selbst bleibt dabei auf Temperaturen, die keinen schädigenden Einfluß auf das Abdeckblech ausüben. Die Tatsache, daß das Abdeckblech in seinem äußeren Bereich des teilkreisförmigen Außenrandes soweit weitergeführt ist, daß es im montiertem Zustand außerhalb des Radius der Bremsscheibe endet, bedingt einen bestmöglichen Schutz der Scheibenbremse vor eindringenden Verschmutzungen, so daß ein daraus resultierender Verschleiß sicher abgewendet werden kann.

Vorzugsweise ist die Stufe an dem Abdeckblech radial so angeformt, daß sie bei montiertem Abdeckblech bezogen auf die Achse im Bereich des Umfanges der Bremsscheibe liegt. Durch die damit geschaffene Verengung kann ein Eindringen von Schmutz in die Scheibenbremsenanordnung noch effektiver verhindert werden.

Gemäß einer vorteilhaften Weiterentwicklung der Erfindung erstreckt sich die Stufe durchgehend entlang des teilkreisförmigen Außenrandes des Abdeckblechs und parallel zu diesem. Dadurch, daß die Stufe ohne Unterbrechungen ausgeführt ist, wird noch einmal eine verbesserte Versteifung erzielt.

Eine noch weiter verbesserte Versteifung und insbesondere eine verbesserte Widerstandsfähigkeit des Abdeckblechs gegenüber Torsionsschwingungen erhält man, wenn, wie gemäß einer Weiterbildung der Erfindung vorgeschlagen, die Stufe in den Randbereichen des (teilkreisförmig ausgebildeten) Außenrandes durch kontinuierliches Überführen des inneren Stufenradius in den Radius der äußeren Blechkante ausläuft. Somit entstehen Randbereiche der Stufe, in denen die Stufe nicht parallel zum teilkreisförmigen Umfang, sondern abgewinkelt in Richtung des äußeren Umfanges des Bleches verläuft, um in diesen Umfang auszulaufen. Eine derartige Ausbildung stärkt insbesondere noch weiter die Torsionssteifigkeit des erfindungsgemäßen Abdeckblechs.

Eine noch bessere Versteifung ergibt sich, wenn das Abdeckblech entlang seinem teilkreisförmigen Außenrand aus der mittels der Stufe ausgebildeten zweiten Ebene von der ersten Ebene weg abgekantet verläuft. Dabei ist vorgesehenen, daß die Abkantung im montierten Zustand des Abdeckblechs bis über den Rand der Bremsscheibe hinaus verläuft, jedoch vor den Lüftungskanälen der Bremsscheibe endet. Hiermit wird neben einer weiteren Versteifung eine seitliche Abdeckung der Scheibenbremse erreicht, so daß auch von dort kein Schmutz in den Bereich der Scheibenbremse eindringen kann. Dadurch, daß das Blech jedoch vor den Lüftungskanälen der Bremsscheibe endet, ist eine optimale Belüftung der Bremsscheibe zum Abführen der beim Bremsen erzeugten Reibungswärme gewährleistet.

Zur Ausbildung eines für die die Abfuhr der beim Bremsen entwickelten Reibungswärme geeigneten Zwischenraumes zwischen dem Abdeckblech und der Bremsscheibe wird vorgeschlagen, daß die axiale Erstreckung des Abdeckblechs ≥ 50 mm gewählt wird. Mit axialer Erstreckung ist dabei der Abstand gemeint, in dem gemessen von der ersten Ebene das Abdeckblech endet.

Die erfindungsgemäßen Merkmale werden dabei bevorzugt im Zusammenhang mit Abdeckblechen verwendet, welche mit ihrem teilkreisförmigen Außenrand einen Kreissektor mit einem Innenwinkel von < 225° umschließen. Derartige Abdeckbleche sind aufgrund der Tatsache, daß sie nur einen kleinen teilkreisförmigen Umfang umschließen hinsichtlich ihres Schwingungsverhaltens insbesondere für Torsionsschwingungen ähnlich anfällig wie linear gestaltete Elemente und benötigen somit eine erhöhte Versteifung.

Schließlich ist vorgesehen, daß das erfindungsgemäße Abdeckblech vorzugsweise über mindestens drei Abstütz- und Befestigungspunkte verfügt, mittels derer es an einem Bremssattel und/oder einem Bremssattelträger befestigbar ist.

Mit der Verwendung des erfindungsgemäßen Abdeckbleches ergibt sich somit eine Scheibenbremse, welche vor einem Eindringen von Schmutz auf der dem Rad gegenüberliegenden Innenseite der Scheibenbremse gesichert ist, wobei das erfindungsgemäße Abdeckblech eine hohe Standfestigkeit durch eine gute Steifigkeit gegenüber Torsions- und Biegeschwingungen aufweist. Um das Abdeckblech dennoch bei eventuellen Beschädigungen einfach und schnell austauschen zu können, ist es dabei von Vorteil, wenn dieses mittels Schraubbolzen am Bremssattel und/oder am Bremssattelträger lösbar festgelegt ist.

Weitere Vorteile und Merkmale der Erfindung ergeben sich aus der nachfolgenden Beschreibung eines Ausführungsbeispiels anhand der Figuren. Dabei zeigen:
- Fig. 1: eine teilweise geschnittene Seitenansicht auf eine Scheibenbremsenanordnung mit erfindungsgemäßen Abdeckblech von Fahrzeugmitte her,
- Fig. 2: eine geschnittene Seitenansicht auf die Scheibenbremsanordnung aus Fig. 1 sowie eine auf dem Achszapfen gelagerte und an die Bremsscheibe angeflanschte Radnabe und
- Fig. 3: eine perspektivische Ansicht eines erfindungsgemäßen Abdeckblechs in einer Ausführung für nicht gelenkte Achsen.

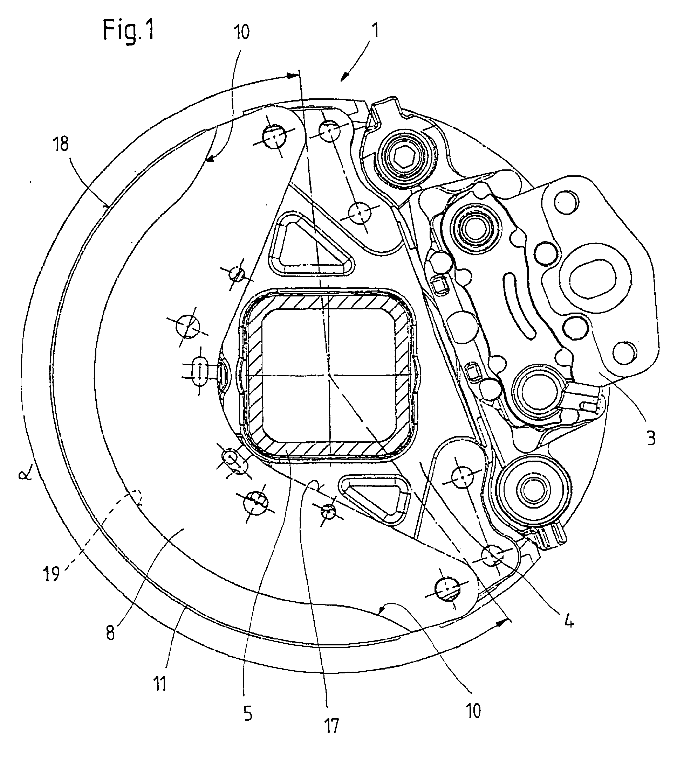

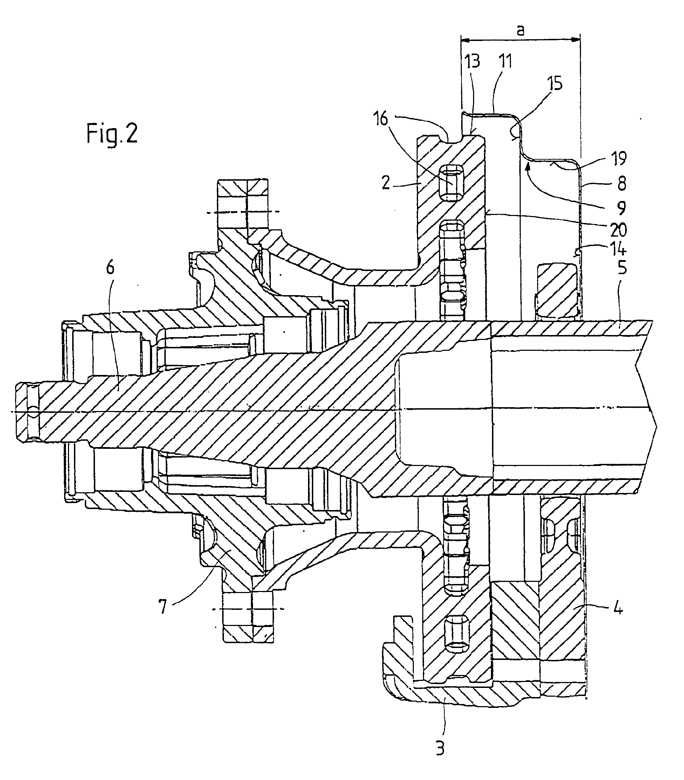

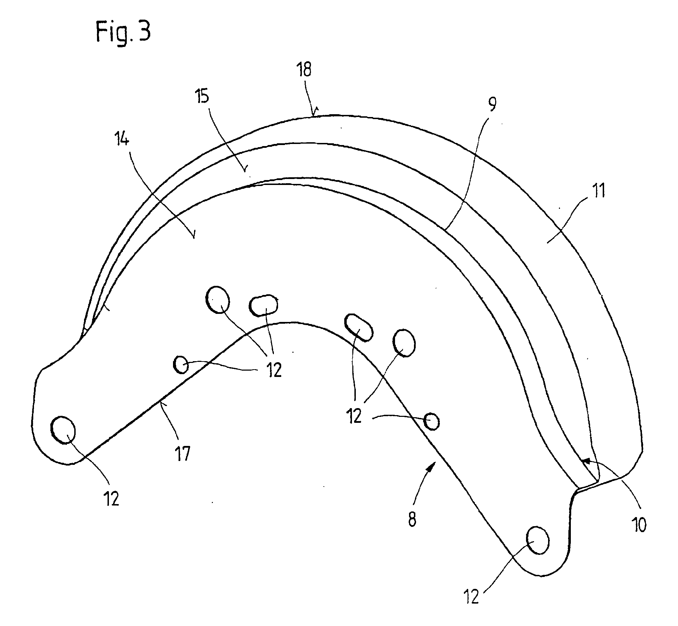

In den Fign. 1 sowie 2 ist eine Scheibenbremsenanordnung 1 zu erkennen, welche eine Bremsscheibe 2, einen Bremssattel 3 und einen Bremssattelträger 4 aufweist. Der Bremssattelträger 4 ist starr mit einem Achskörper 5 verbunden, welcher in diesem Fall als Rechteckrohrachse ausgeführt ist. Die Achse 5 ist zu ihrem Ende hin zu einem Achszapfen 6 verjüngt, auf dem eine Nabe 7 gelagert und mit der Bremsscheibe 2 über eine Flanschverbindung verbunden ist. Zu erkennen ist weiterhin ein erfindungsgemäßes Abdeckblech 8, welches den nicht von dem Bremssattel 3 bzw. dem Bremssattelträger 4 überdeckten Bereich der Bremsscheibe 2 abdeckt. Eine perspektivische Darstellung dieses Abdeckblechs ist in Fig. 3 gegeben.

Das Abdeckblech 8 weist dabei in einem ersten Kantenabschnitt einen komplementär zu einer an dem Bremssattelträger 4 ausgebildeten Anlegekante ausgeformten Innenrand 17 auf. In einem weiteren, äußeren Abschnitt ist der Rand des Abdeckblechs 8 teilkreisförmig ausgebildet. Im Bereich dieses teilkreisförmig ausgebildeten Außenrandes 18 ist eine Stufe 9 zu erkennen. Wie am besten in Fig. 2 zu erkennen ist, befindet sich die Stufe 9 im montierten Zustand des Abdeckblechs 8 nahe des Umfangs der Bremsscheibe 2, jedoch im Abstand von dieser. Über die Kante 9 wird das Abdeckblech aus einer ersten, von der Bremsscheibe 2 entfernt gelegenen, in etwa parallel zu dieser verlaufenden Ebene 14 in eine zweite, näher an der Bremsscheibe 2 gelegene, ebenfalls parallel zu dieser verlaufenden Ebene 15 umgelenkt. Darüber hinaus ist zu erkennen, daß das Abdeckblech 8 in einer weiteren Abkantung 11 axial in Richtung zur Bremsscheibe 2 geführt ist, wobei sich die Kante 11 des Abdeckblechs 8 bis über den äußeren Rand 13 der Bremsscheibe 2 hinaus erstreckt und sich bis in Höhe der in der Bremsscheibe 2 ausgebildeten Lüftungskanäle 16 erstreckt. Die Stufe 9 in Verbindung mit der äußeren Abkantung 11 dienen einerseits einer Versteifung des Abdeckblechs 8 und andererseits eines umfänglichen Abschlusses des Bereichs der Scheibenbremsenanordnung 1 in Richtung zu der umgebenden Felge bzw. dem Rad hin, um ein Eindringen von Verschmutzungen in dem Bereich der Scheibenbremsenanordnung 1 zu verhindern.

Eine weitere Versteifung gegenüber Torsionsbelastungen des Abdeckblechs 8 ergibt sich durch die Tatsache, daß die Stufe 9 jeweils nahe der Enden des Teilkreisabschnittes des Abdeckblechs 8 durch kontinuierliches Überführen der Innenwandung 19 der Stufe 9 in den Radius der Abkantung 11 ausläuft. In diesen Bereichen wird die ansonsten konzentrische Führung des Außenrandes 18 bzw. der Abkantung 11 und der Stufe 9 aufgegeben, und die Linie der Stufe 9 wird fließend auf den Radius des teilkreisförmigen Umfangs der Abkantung 11 überführt.

Durch die rechteckige Stufe 9 wird das Abdeckblech aus der ersten Ebene 14 in die zweite Ebene 15 überführt, von der die Abkantung 11 ausgeht. Dabei hat das Abdeckblech 8 eine axiale Erstreckung a von ca. 90 mm. Das Abdeckblech 8 umschließt im Bereich seines teilkreisförmigen Umfanges einen in Fig. 1 zu erkennenden Winkel α von 210°. Durch diese Tatsache und aufgrund der Tatsache, daß die im Abschnitt 17 geführte Kante sehr weit in Richtung der im Abschnitt 18 gelegenen teilkreisförmigen Kante des Bleches geführt ist, hat das Abdeckblech 8 eine in etwa sichelförmige Ausbildung und ist deshalb im Prinzip anfällig für sowohl Torsions- als auch Biegeschwingungen. Dieser Anfälligkeit wird durch die Ausbildung der gezeigten Stufe 9 sowie der abgerundeten Überführung der Stufe 9 im Bereich 10 von einem Innendurchmesser auf einen Außendurchmesser entgegengewirkt.

Die Tatsache, daß das erfindungsgemäße Abdeckblech 8 im eingebauten Zustand am Rand 13 der Bremsscheibe 2 nicht über die Lüftungsöffnungen 16 der Bremsscheibe 2 hinausragt, bewirkt, daß eine sichere Abfuhr der durch beim Bremsen entstehende Reibungswärme aufgewärmten Luft aus der Bremsscheibe 2 erfolgen kann. Damit wird die notwendige Kühlung der Bremsscheibe beim Bremsen sichergestellt. Darüber hinaus bedingt der große axiale Abstand zwischen der Ebene 14 des Abdeckblechs 8 und der dem Abdeckblech 8 zugewandten Bremsfläche 20 der Bremsscheibe 2 einen ausreichend großen Luftraum, der von der Bremsscheibe 2 ausgehende Strahlungswärme auffangen und mittels Entlüftung abführen kann. Auf diese Weise wird sichergestellt, daß das erfindungsgemäße Abdeckblech 8 keine Überhitzung erfährt. Der Abstand zwischen dem Rand 13 der Bremsscheibe 2 und dem Außenrand 18 der Abkantung 11 des Abdeckblechs 8 ist dabei so bemessen, daß der zwischen Abdeckblech 8 und Bremsscheibe 2 ausgebildete Luftraum mit der Umgebungsluft in Verbindung steht und erwärmte Luft über diesen Weg abgeführt werden kann.

Das erfindungsgemäße Abdeckblech weist eine Vielzahl von Befestigungsöffnungen 12 auf, durch welche Schraubbolzen zum Befestigen des Abdeckblechs 8 an dem Bremssattelträger 4 oder auch direkt an dem Bremssattel 3 geführt werden können.

Das gezeigte Abdeckblech 8 ist dabei vorzugsweise zur Verwendung mit einer nicht angetriebenen, nicht gelenkten Achse eines Nutzfahrzeuges vorgesehen, es kann jedoch ohne weiteres dahingehend modifiziert werden, daß es beispielsweise für eine nicht angetriebene, gelenkte Achse oder aber auch für angetriebene Achsen gelenkter oder ungelenkter Natur verwendet werden kann. Das gezeigte Abdeckblech ist dabei weder auf eine Verwendung mit einer Schwimmsattelbremse noch auf eine Verwendung mit einer Scheibenbremse mit schwimmender Scheibe beschränkt, sondern kann für alle Arten von Scheibenbremsen eingesetzt werden.

Mit dem erfindungsgemäßen Abdeckblech ist es möglich, auch bei Scheibenbremsenanordnungen, in denen ausgedehnte Bereiche der Bremsscheibe bereits durch den Bremssattel bzw. den Bremssattelträger überdeckt sind, die verbleibenden Bereiche der Bremsscheibe so zu überdecken, daß auftretende Schwingungen durch die an dem Abdeckblech 8 angebrachten Versteifungen sicher abgefangen werden können, so daß das Abdeckblech 8 keine durch Schwingungen hervorgerufenen Schäden nimmt. Somit kann mit Hilfe des erfindungsgemäßen Abdeckbleches das Eindringen von Verschmutzungen, insbesondere von sandhaltigen Verschmutzungen in den Bereich der Scheibenbremsenanordnung sicher verhindert werden, so daß ein Verschleiß insbesondere der auf dem Bremssattel aufgesetzten Bremsbeläge vermindert werden kann.

### Bezugszeichenliste

- 1: Scheibenbremsenanordnung
- 2: Bremsscheibe
- 3: Bremssattel
- 4: Bremssattelträger
- 5: Achse
- 6: Achszapfen
- 7: Nabe
- 8: Abdeckblech
- 9: Stufe
- 10: Bereich
- 11: Abkantung
- 12: Befestigungsöffnungen
- 13: äußerer Rand
- 14: Ebene
- 15: Ebene
- 16: Lüftungskanal
- 17: Innenrand
- 18: Außenrand
- 19: Innenwandung
- 20: Bremsfläche
- a: axiale Erstreckung
- α: Winkel

## Patentansprüche

1. Abdeckblech zum seitlichen Abdecken des nicht durch einen Bremssattel (3) und/oder Bremssattelträger (4) abgedeckten Bereichs einer Scheibenbremse (1), insbesondere von Nutzfahrzeugen, wobei das Abdeckblech (8) einen Innenrand (17) aufweist, der an den Bremssattel (3) und/oder den Bremssattelträger (4) angepaßt ist, und einen Außenrand, der im wesentlichen teilkreisförmig verläuft,
**gekennzeichnet durch**
eine im Bereich des Außenrandes (18) des Abdeckblechs (8) angeformte, sich in Umfangsrichtung erstreckende Stufe (9), an der das Abdeckblech (8) über eine axiale Distanz aus einer ersten Abdeckebene (14) in eine zweite, im Montagezustand näher zu der Bremsscheibe (2) hin gelegenen Ebene (15) übergeht, wobei sich das Abdeckblech (8) in der zweiten Ebene (15) so weit radial nach außen erstreckt, daß es in montiertem Zustand außerhalb des Radius der Bremsscheibe (2) endet.

2. Abdeckblech nach Anspruch 1, **dadurch gekennzeichnet, daß** die Stufe (9) an dem Abdeckblech (8) radial so angeordnet ist, daß sie bei montiertem Abdeckblech (8) bezogen auf die Achse (5) im Bereich des Umfangs der Bremsscheibe (2) liegt.

3. Abdeckblech nach einem der Ansprüche 1 oder 2, **dadurch gekennzeichnet, daß** sich die Stufe (9) kontinuierlich entlang des teilkreisförmigen Außenrandes (18) des Abdeckblechs (8) und parallel hierzu erstreckt.

4. Abdeckblech nach einem der Ansprüche 1 bis 3, **dadurch gekennzeichnet, daß** die Stufe (9) in den Randbereichen (10) des teilkreisförmigen Außenrandes (18) durch kontinuierliches Überführen des inneren Stufenradius in den Radius der äußeren Blechkante ausläuft.

5. Abdeckblech nach einem der Ansprüche 1 bis 4, **gekennzeichnet durch** eine im Bereich des teilkreisförmigen Außenrandes (18) ausgebildeten Abkantung (11), in welcher das Abdeckblech (8) aus der zweiten Ebene (15) von der ersten Ebene (14) weg verläuft, wobei das Abdeckblech (8) im Montagezustand bis über den Rand (13) der Bremsscheibe (2) hinausgeführt ist und vor den Lüftungskanälen (16) der Bremsscheibe (2) endet.

6. Abdeckblech nach einem der Ansprüche 1 bis 5, **dadurch gekennzeichnet, daß** es zwischen der ersten Ebene (14) und einer äußersten Abdeckebene eine axiale Erstreckung von > 50 mm aufweist.

7. Abdeckblech nach einem der Ansprüche 1 bis 6, **dadurch gekennzeichnet, daß** der teilkreisförmige Außenrand (18) einen Kreissektor mit einem Innenwinkel von < 225° begrenzt.

8. Abdeckblech nach einem der Ansprüche 1 bis 7, **gekennzeichnet durch** mindestens drei Abstütz- und Befestigungspunkte zum Festlegen an einem Bremssattel (3) und/oder einem Bremssattelträger (4).

9. Scheibenbremse, insbesondere für ein Nutzfahrzeug, mit einer Bremsscheibe (2), einem mit Bremsbelägen versehenen Bremssattel (3) sowie einem Bremssattelträger (4), **dadurch gekennzeichnet, daß** der durch den Bremssattel (3) und/oder Bremssattelträger (4) nicht abgedeckte Bereich durch ein Abdeckblech (8) nach einem der Ansprüche 1 bis 7 abgedeckt ist.

10. Scheibenbremse nach Anspruch 9, **dadurch gekennzeichnet, daß** das Abdeckblech (8) mittels Schraubbolzen an dem Bremssattel (3) und/oder dem Bremssattelträger (4) lösbar befestigt ist.
